# EUROPEAN PATENT SPECIFICATION

(11) **EP 1 677 215 B1**
(45) Date of publication and mention of the grant of the patent: **29.07.2009**
(21) Application number: 05112133.3
(22) Date of filing: 14.12.2005
(51) Int. Cl.: G06F 17/30

(54) **Methods and apparatus for the evalution of aspects of a web page**
Verfahren und Vorrichtung zur Evaluierung der Eigenschaften einer Webseite
Procédés et appareils pour évaluer des aspects d'une page Web

(30) Priority: 30.12.2004 US 27661
(43) Date of publication of application: 05.07.2006
(73) Proprietor: MICROSOFT CORPORATION, Redmond, Washington 98052-6399 (US)
(72) Inventor: Starbird, Michael A., Redmond, WA 98052 (US)
(74) Representative: Grünecker, Kinkeldey, Stockmair & Schwanhäusser Anwaltssozietät

(56) References cited:
- EP-A- 0 964 340
- WO-A-01/52078
- US-A1- 2002 099 694
- US-A1- 2003 051 216
- US-A1- 2004 014 013
- CHAKRABARTI S ET AL: "Automatic resource compilation by analyzing hyperlink structure and associated text" COMPUTER NETWORKS AND ISDN SYSTEMS, NORTH HOLLAND PUBLISHING. AMSTERDAM, NL, vol. 30, no. 1-7, April 1998 (1998-04), pages 65-74, XP004121439 ISSN: 0169-7552

## Description

### FIELD OF INVENTION

This invention relates to computer software, and more particularly to software which may be used to evaluate aspects of a web page.

### BACKGROUND OF INVENTION

Many people employ the Internet to use the World Wide Web ("the web"). In the web environment, a server computer provides information requested by a client computer in the form of a web page. A web page includes, among other information, a set of instructions, or "tags," provided in a markup language format, such as Hypertext Markup Language (HTML) or Extensible Markup Language (XML). A browser program executing on the client computer receives and processes the tag(s) included in the page to create a display for a user. A tag may, for example, define the presentation of a page element.

A tag may also define a hypertext link (referred to herein as a "link"). A link identifies another web resource, such as another web page, via a Uniform Resource Locator (URL). A link may be represented on a web page by alphanumeric characters ("link text"). Link text is typically presented on a web page so that the link is easily identifiable by the user. For example, many links are represented on the page by boldface or underlined text. A user may invoke a link, for example, by "clicking" on it (e.g., by using a mouse to move a cursor over the link and pressing a button on the mouse). Clicking on the link may cause a request to be issued to a server computer to access the web resource at the URL defined by the link.

A group of logically related web pages is generally referred to as a web site. Some web sites can be cumbersome to maintain. For example, the URLs defined by links on a web page may become obsolete over time, as the URL for a particular web resource may change, or a web resource may be deleted. To assist with the maintenance of web sites, a number of automated tools have arisen which allow an administrator or other user to manage the links included in the pages of a web site. These tools may, for example, assist the user in determining whether links included in the pages of a site define existing URLs. The tools may also provide a graphical user interface (GUI) which enables the user to view the disposition of links in a site.

WO 01/52078 A relates to a method and system for automatical checking the validity of hyperlinks embedded in web pages. This is done by parsing the document, separating the hyperlinks from the other elements in the documents and then reviewing the hyperlinks to determine whether dead links are present.

Chakrabarti S. et al: "Automatic resource compilation by analyzing hyperlink structure and associated text", Computer Networks and ISDN Systems, North Holland Publishing, Amsterdam, NL, vol. 30, no. 1-7, April 1998, pages 65-74, relates to automatic resource compilation by analyzing hyperlink structure and associated text. A system is provided for automatically compiling a list of authoritative Web resources on any topic. The system is built on an algorithm that performs a local analysis of both text and links to arrive at a "global consensus" of the best resources for the topic. In order to take into account the text describing the topics, the text around links to a page p is taken into account, since it is descriptive of the contents of p. For this purpose, a positive numerical weight w(p, q) is assigned to each link from a page p to a page q. This weight increases with the amount of topic-related text in the vicinity of the link from p to q. The "vicinity" of a link is defined by a window of B bytes on either side of a link, where B is a parameter determined through an experiment. The vicinity includes the text between the <a href="... "> and </a> tags.

### SUMMARY OF THE INVENTION

The object of the present invention is to provide an automatic method for evaluating a hypertext link included in a first web page and referencing a web resource, by computing a relevancy score defining the extent to which a characteristic of the link corresponds to a characteristic of the web resource.

This object is solved by the subject matter of the independent claims.

Embodiments are given in the dependent claims.

According to one embodiment, an automated method is provided for evaluating a hypertext link included in a first web page, the link referencing a web resource. The automated method comprises determining whether a characteristic of the link satisfactorily corresponds to a characteristic of the web resource.

According to another embodiment, a computer-readable medium is provided which is encoded with instructions that, when executed, perform a method for evaluating a hypertext link included in a first web page, the link referencing a web resource. The method comprises determining whether a characteristic of the link satisfactorily corresponds to a characteristic of the web resource.

According to yet another embodiment, a system is provided for evaluating a hypertext link included in a first web page, the link referencing a web resource. The system comprises a determination controller that determines whether a characteristic of the link satisfactorily corresponds to a characteristic of the web resource.

### BRIEF DESCRIPTION OF DRAWINGS

The accompanying drawings are not intended to be drawn to scale. In the drawings, identical components illustrated in various figures are represented by like numerals. Not every component is labeled in every drawing. In the drawings:
FIG. 1 is a block diagram of an exemplary computer system with which embodiments of the invention may be implemented;
FIG. 2 is a block diagram of an exemplary computer memory on which programmed instructions comprising embodiments of the invention may be stored;
FIGS. 3A and 3B depict an exemplary browser interface for presenting a web page to a user;
FIG. 4 is a flow chart showing an exemplary process for determining the extent to which first and second token strings correspond, according to one embodiment of the invention;
FIG. 5 is a flow chart showing an exemplary process for comparing the tokens within first and second token strings, according to one embodiment of the invention;
FIG. 6 is a flow chart showing an exemplary process for comparing specific tokens, according to one embodiment of the invention; and
FIG. 7 depicts an exemplary graphical user interface (GUI) which may display an extent to which first and second token strings correspond, according to one embodiment of the invention.

### DETAILED DESCRIPTION

Applicants have appreciated that while many utilities exist which may be used to determine whether a link on a web page defines a URL at which a resource actually resides, no utilities exist which determine whether a resource (e.g., a web page) residing at a URL defined by a link corresponds satisfactorily to the link text presented on the page. That is, no utilities exist which compare the link text to the resource actually referenced by the link to determine whether the link references a resource which it purports to reference.

Accordingly, one embodiment of the invention provides an automated method for evaluating the extent to which link text corresponds to a web page referenced by the link. In one embodiment, the link text may be compared to the title of a web page referenced by the link. In one embodiment, each of the link text and page title may be parsed into individual "tokens," and the tokens may be compared to determine the extent to which the link text and the page title correspond. In one embodiment, each individual token found in the link text is compared to each token found in the page title according to a first algorithm to determine whether a match exists. In one embodiment, the relevancy between the link text and the page title may then be expressed as a percentage of the total tokens in the link text or the title page which match tokens in the other list.

Embodiments of the invention may, for example, be employed by an automated utility which determines the overall validity of links included in a web page. For example, embodiments may be employed by a utility which assesses not only whether links included in a web page define valid or existing URLs, but also whether each of the links references a resource which it purports to reference. The results of this evaluation may be presented to a user via a graphical user interface (GUI). As such, a user may more effectively evaluate the overall validity of links included in a page. However, it should be appreciated that the invention is not limited to these uses, as aspects of the invention may have numerous applications. As an example, aspects of the invention may be employed by a browser program, and may serve to alert the user to links which apparently do not reference pages which the links purport to reference.

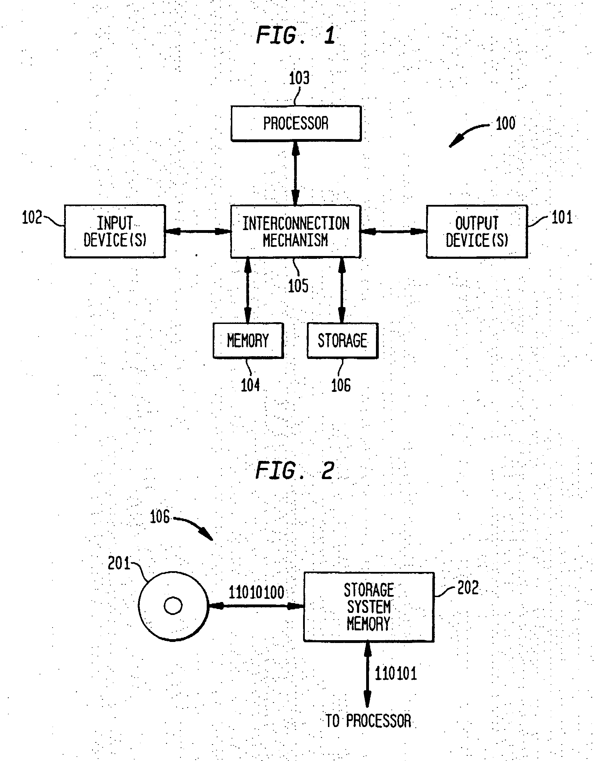

Various aspects of the invention may be implemented by one or more computer systems, such as the exemplary computer system 100 shown in FIG. 1. Computer system 100 includes input device(s) 102, output device(s) 101, processor(s) 103, memory system 104 and storage 106, all of which are coupled, directly or indirectly, via interconnection mechanism 105, which may comprise one or more buses, switches, and/or networks. The input device(s) 102 receive input from a user or machine (e.g., a human operator, or telephone receiver), and the output device(s) 101 display or transmit information to a user or machine (e.g., a liquid crystal display). The processor(s) 103 typically executes a computer program called an operating system (e.g., a Microsoft Windows (R)-family operating system or other suitable operating system) which controls the execution of other computer programs, and provides scheduling, input/output and other device control, accounting, compilation, storage assignment, data management, memory management, communication and data flow control. Collectively, the processor and operating system define the computer platform for which application programs in other computer programming languages are written.

The processor(s) 103 may also execute one or more computer programs to implement various functions. These computer programs may be written in any type of computer programming language, including a procedural programming language, object-oriented programming language, macro language, or combination thereof. These computer programs may be stored in storage system 106. Storage system 106 may hold information on a volatile or nonvolatile medium, and may be fixed or removable. Storage system 106 is shown in greater detail in FIG. 2.

Storage system 106 typically includes a computer-readable and -writeable nonvolatile recording medium 201, on which signals are stored that define a computer program or information to be used by the program. The medium may, for example, be a disk or flash memory. Typically, in operation, the processor(s) 103 causes data to be read from the nonvolatile recording medium 201 into a volatile memory 202 (e.g., a random access memory, or RAM) that allows for faster access to the information by the processor 103 than does the medium 201. This memory 202 may be located in storage system 106, as shown in FIG. 2, or in memory system 104, as shown in FIG. 1. The processor(s) 103 generally manipulates the data within the integrated circuit memory 104, 202 and then copies the data to the medium 201 after processing is completed. A variety of mechanisms are known for managing data movement between the medium 201 and the integrated circuit memory element 104, 202, and the invention is not limited thereto. The invention is also not limited to a particular memory system 104 or storage system 106.

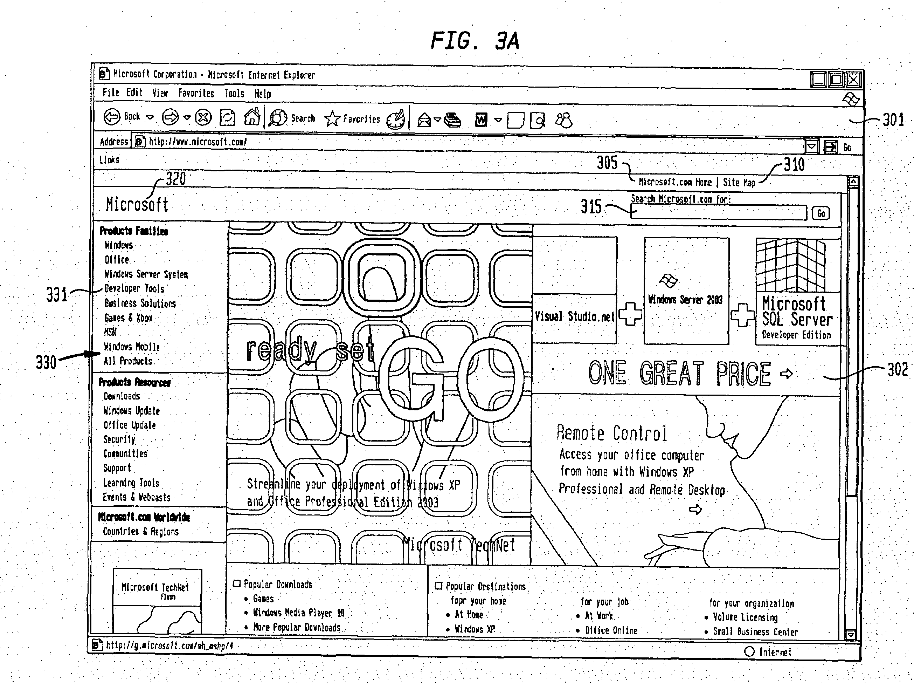

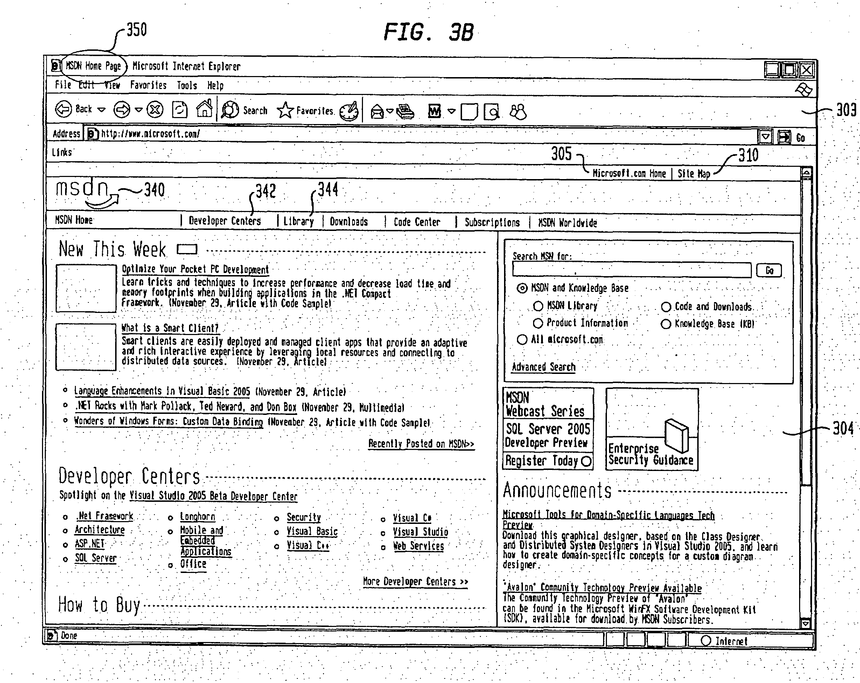

As discussed above, one embodiment of the invention provides an automated method, which may be performed by computer system 100, for evaluating the extent to which text which characterizes a link on a web page corresponds to a resource referenced by the link. Exemplary web pages that include links which may be evaluated according to embodiments of the invention are shown FIGS. 3A-3B. Specifically, FIG. 3A shows browser interface 301, which presents web page 302, and FIG. 3B shows browser interface 302, which presents web page 303.

Web page 302 includes various elements which are common to web pages, including graphics, text and links 305, 310, 315 and 320. Web page 302 also includes menu portion 330, which includes a number of additional links, including link 331, entitled "Developer Tools". When a user invokes link 331 (e.g., by moving a cursor over link 331, and pressing a mouse button or striking the "enter" key), the browser may issue a request to access web page 304.

Web page 304 is shown in FIG. 3B. Web page 304 is similar in many respects to web page 302. For example, web page 304 includes links 305 and 310, which are also provided by web page 302. Web page 304 also includes links 340, 342 and 344, among others. Web page 304 includes title 350, represented by the text "MSDN Home Page" displayed at the top of interface 303.

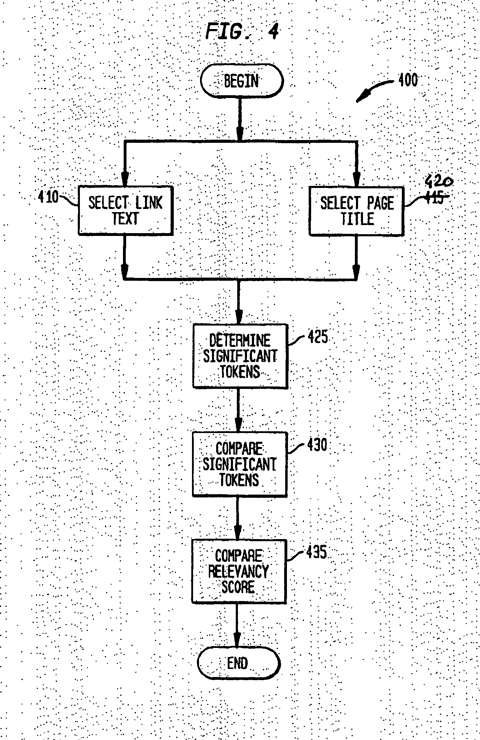

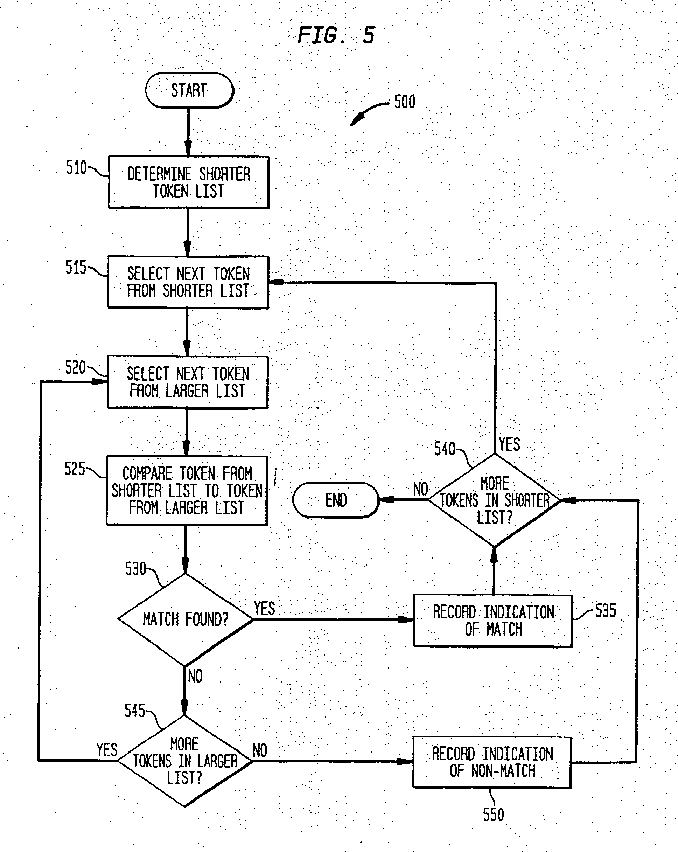

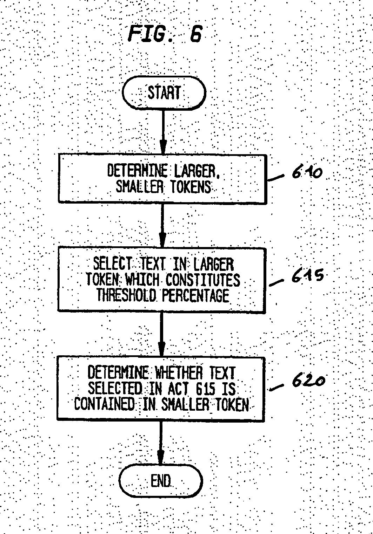

An exemplary technique for evaluating a link included in a web page is described below with reference to FIGS. 4-6. Each of FIGS. 4-6 provides a flowchart illustrating the technique at progressively greater levels of detail. FIG. 4 is a flowchart which illustrates the overall technique. FIG. 5 is a flowchart which illustrates the act of comparing individual tokens found in the link text and page title in greater detail. Finally, FIG. 6 is a flowchart which illustrates the comparison in even greater detail.

Referring first to FIG. 4, upon the start of process 400, acts 410 and 420 are initiated. In act 410, link text is selected for evaluation. This may be performed in any suitable fashion, such as by reading the link text into memory. In one embodiment, the result of act 410 is a "token list", or collection of tokens (i.e., individual words or character strings) which constitute the link text. In one embodiment, each token in the list may be separated or bounded by a "blank" or "space" character. Using the example of link 331 (FIG. 3A), from the link text "Developer Tools", the result of act 410 may be a token list which includes the tokens "Developer" and "Tools".

In act 420, the process attempts to determine the title of the page referenced by the link. This also may be performed in any suitable fashion, such as by issuing a request to access the referenced page. As with act 410, the result of act 420 is a token list. Using the example of title 350 (FIG. 3B) from page 104 (i.e., the page which is served when the user invokes link 131), the page title "MSDN Home Page" the result of act 420 is a token list which includes the tokens "MSDN", "Home" and "Page".

Upon the completion of acts 410 and act 420, the process proceeds to act 425, wherein the "significant tokens" in each token list are determined. In one embodiment, significant tokens in each list are determined by eliminating known insignificant tokens. An insignificant token may be, for example, a word which will is known to be less useful for comparing token lists. That is, even if an insignificant token is found in both the link text token list and the page title token list, the fact that the insignificant token will yield a match between the token lists is not useful for determining whether the link text token list corresponds to the page title token list. For example, insignificant tokens may include words such as "the," "and" and/or other words or collections of characters.

In one embodiment, insignificant tokens may be stored in a data structure which is accessed by process 400 during execution. In one embodiment, the data structure may be configurable, such that a user may add to, delete from, or modify the collection of insignificant tokens provided therein. The capability to configure the collection of insignificant tokens may be useful, for example, in adapting the list for use with tokens in languages other than English. For example, a user may add a collection of common French pronouns to the list in order to evaluate link text corresponding to links provided in a French web site.

In one embodiment, the act 425 also includes removing particular characters from each token list. For example, characters such as a period, semicolon, hyphen, ampersand, and/or other characters may be removed from each token list to facilitate a more effective comparison between the two.

Upon the completion of the act 425, the process proceeds to act 430, wherein the lists of significant tokens are compared. An exemplary technique for comparing lists of significant tokens is shown in FIG. 5. In the process of FIG. 5, the shorter of the two token lists is first selected, and then each token in the shorter list is compared to each token in the larger list in sequence.

Upon the start of process 500, the process proceeds to act 510, wherein the shorter of the two token lists is determined. This may be performed in any suitable fashion. For example, in one embodiment, this may be performed by determining which of the token lists contains a smaller number of tokens. In another, this may be performed by determining which of the token lists contains a smaller number of characters. The invention is not limited to a particular implementation.

Upon the completion of act 510, the process proceeds to act 515, wherein a token is selected from the shorter list (determined in act 510) for comparison to tokens in the larger list. This may be performed in any suitable manner. For example, a token may be selected from the token list randomly.

Upon the completion of act 515, the process proceeds to act 520, wherein a first of the tokens from the larger list is selected for comparison. As with the selection in act 515, this may be performed in any suitable fashion.

Upon completion of the act 520, the process proceeds to act 525, wherein the selected token from the shorter list is compared to the selected token from the larger list to determine whether the tokens match. An exemplary technique for performing act 525 is depicted in FIG. 6. The process of FIG. 6 is described below with reference to a comparison between two exemplary tokens: "referral" and "refers."

Upon the start of process 600, the process proceeds to act 610, wherein the larger and smaller of the two tokens are determined. This may be performed in any suitable fashion. For example, the token having a smaller number of characters may be determined to be the smaller token, and the token having a greater number of characters may be determined to be the larger token. In one embodiment, if the tokens contain the same number of characters, larger and smaller tokens may be determined in random order. In the example given, the process may determine that the larger token is "referral" and the smaller token is "refers."

Upon the completion of act 610, the process proceeds to act 615, wherein the text in the larger token which constitutes at least a "threshold percentage" of the larger token is determined. In one embodiment, the threshold percentage constitutes a portion of the text in the larger token which is used for comparison to the smaller token. In one embodiment, this portion is identified by identifying the total number of characters in the larger token, and then, starting from the first character in the token, identifying the number of characters which meets or exceeds the threshold percentage. Using the example given, if the threshold percentage is 60%, the text in the larger token "referral" which constitutes the threshold percentage is "refer" (i.e., five of the eight characters in "referral," or 62.5% of the text).

In one embodiment, the threshold percentage may be configurable (e.g., by a user) to suit the needs of a specific implementation. For example, a GUI may be provided which may enable the user to alter the threshold percentage to suit a specific implementation.

Upon the completion of act 615, the process proceeds to act 620, wherein a comparison between the text identified in act 615 and the smaller token is performed. In one embodiment, the comparison entails determining whether the text identified in act 615 is contained within the smaller token. Using the example given, the process would determine whether "refer" (determined in act 615) is contained within "refers." However, this comparison may be performed in any suitable manner, as the invention is not limited in this respect.

Upon the completion of act 620, the process 600 completes and the overall process returns to process 500 (FIG. 5). More specifically, because the process of FIG. 6 is an exemplary technique for performing act 525, the overall process returns to FIG. 5 at act 525.

After act 525 is completed, the process proceeds to act 530, wherein a determination is made as to whether a match is found. In one embodiment, a match is found if it was determined in act 620 (FIG. 6) that the text identified in act 615 is contained in the smaller token. If a match is found, the process proceeds to act 535, wherein an indication of a match is recorded. The indication may be recorded, for example, in memory.

If a match is not found, then process proceeds to the act 545, wherein a determination is made as to whether more tokens exist in the larger token list. If it is determined that more tokens exist in the larger token list, then process returns to the act 520 so that the next token in the larger list may be selected. Thus, the process performs a comparison between each token in the shorter list and all the tokens in the larger list.

If it is determined in act 545 that no more tokens exist in the larger list, the process proceeds to act 550, wherein an indication that no match was found between the token in the shorter list and any of the tokens in the larger list.

Upon the completion of either of acts 535 and 550, the process proceeds to act 540, wherein a determination is made as to whether more tokens exist in the shorter list. If not, the process completes. If more tokens exist in the shorter list, the process returns to act 515 so that the next token in the shorter list may be selected for comparison. Thus, the process repeats the comparison for all of the tokens in the shorter list.

When the tokens in both the smaller token list and larger token list are exhausted, the process 500 completes and the overall process returns to process 400 (FIG. 4). More specifically, because the process of FIG. 5 is an exemplary technique for performing act 430, the overall process returns to FIG. 4 at act 430.

After act 430 is completed, the process 400 proceeds to act 435, wherein a relevancy score is computed to define the extent to which the link text and the page title correspond. In one embodiment, the relevancy score is computed by dividing the number of matching significant tokens (determined in act 620) by the total number of significant tokens in the shorter token list (i.e., determined in act 510), and multiplying the result by 100%. However, the extent to which the two token lists correspond may be determined in any suitable fashion, as the invention is not limited in this respect.

Upon the completion of act 435, the process 400 completes.

In one embodiment, a minimum relevancy score may define whether two token lists satisfactorily correspond. For example, a minimum relevancy score of 70% may be established to define the extent to which two token lists must correspond to constitute a "match," thereby defining whether the link text and the page title (which the token lists represent) match.

In one embodiment, as with the threshold percentage discussed above, the minimum relevancy score defining satisfactory correspondence between the token lists may be configurable (e.g., by a user) to suit the needs of a specific implementation. For example, a GUI may be provided which may enable the user to customize the minimum relevancy score to suit a specific implementation.

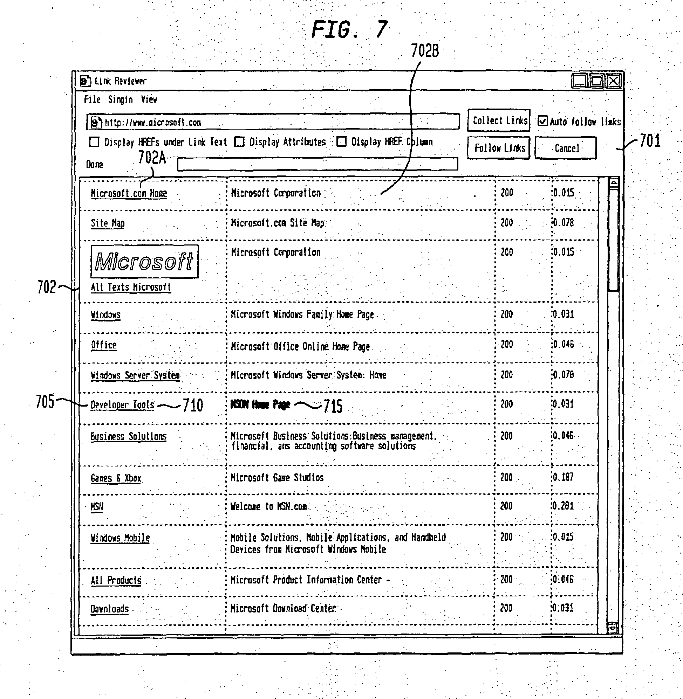

Token lists which do not match may be identified to a user. For example, a GUI may visually indicate to a user that token lists representing link text and a page title do not match. An exemplary GUI 700, shown in FIG. 7, provides the results of a comparison between the links included in web page 102 (FIG. 1A) and the titles of the pages referenced by each.

GUI 700 includes portions 701 and 702. Portion 702 provides a grid display in which specific information related to links is presented in each column. For example, column 702A includes the link text and column 702B contains the title of the page referenced by the link.

In the exemplary embodiment shown, a visual indication is provided for page titles which are deemed to not match the text representing a link on the web page. For example, row 705 contains text 710 representing link 331 (FIG. 3A) and title 715 (i.e., title 350 in FIG. 3B) of the web page 304 which link 331 references. Row 705 shows title 715 in boldface to visually indicate that the title has been deemed to not match link text 710.

Using the techniques described above, an administrator or other user may more effectively maintain links provided by a web site. For example, upon being alerted that the text representing a link does not match the title of the page which the link references (e.g., via GUI 700), the user may more closely examine the link to determine whether the link references the correct page. As a result, the user may more efficiently update links which reference invalid resources, instead of (as with conventional tools) just identifying the links which are obsolete.

It should be appreciated, however, that the invention is not limited to such an implementation, as numerous other applications are possible. For example, the invention need not be employed by an administrator to maintain a web site. Instead, embodiments of the invention may be implemented in a browser program which examines the links included in a web page to determine whether those links reference the documents they purport to reference. The browser may provide a visual indication of link text which does not match the title of the page the link purports to reference, and/or may block the user from accessing the page which is referenced. Thus, embodiments of the invention may be useful in helping the user avoid malicious, harmful or otherwise undesirable content.

As another example, the comparison techniques described above with reference to FIGS. 4-6 need not be employed to determine a match between link text and a page title. For example, the algorithms may be employed to determine the relevance of a page title to a query string. Instead of determining relevant matches to a query string by matching the string to web page content (as search engines do), the string may instead be matched to the page title. Further, the matches may be sorted in order of relevance to the query string, such as by using the relevancy score which is described above.

It should be appreciated from the foregoing that aspects of the embodiments of the invention may be implemented in one or more computer programs, and/or hardware, firmware, or combinations thereof. For example, the various components of an embodiment either individually or in combination may be implemented as a computer program product which includes a computer readable medium on which instructions are stored for access and execution by a processor. When executed by a computer, the instructions may direct the computer to implement various aspects of the embodiment.

Having described several aspects of at least one embodiment of this invention, it is to be appreciated various alterations, modifications, and improvements will readily occur to those skilled in the art. Such alterations, modifications, and improvements are intended to be part of this disclosure.
Accordingly, the foregoing description and drawings are by way of example only.

## Claims

1. An automated method for evaluating a hypertext link (305, 310, 331) included in a first web page (302), the link referencing a second web page (304),
**characterized by**:
(A) computing a relevancy score defining the extent to which text representing the link on the first web page corresponds to a title (350) of the second web page.

2. The method of claim 1, wherein the act (A) further comprises:
(A1) parsing (410, 425) the text representing the link on the first web page into a first list of tokens, the first list of tokens including at least one token;
(A2) parsing (420, 425) the title of the second web page into a second list of tokens, the second list of tokens including at least one token; and
(A3) comparing (430) the first list of tokens to the second list of tokens.

3. The method of claim 2, wherein the act (A3) further comprises:
selecting a first token from the first list of tokens;
selecting a second token from the second list of tokens;
determining (610) which of the first and second tokens is a larger token and which is a smaller token;
identifying (615) a portion of the larger token which constitutes a threshold percentage; and
determining (620) whether the threshold percentage is contained within the smaller token.

4. The method of claim 2, wherein the act (A1) further comprises determining (425) a first list of significant tokens from the first list of tokens by comparing each of the tokens in the first list of tokens to a collection of insignificant tokens, the act (A2) further comprises determining (425) a second list of significant tokens from the second list of tokens by comparing each of the tokens in the second list of tokens to a collection of insignificant tokens, and the act (A3) further comprises comparing (430) the first list of significant tokens to the second list of significant tokens.

5. The method of claim 1, further comprising an act of:
(B) displaying the results of the determination in the act (A) on a graphical user interface, GUI (301, 303).

6. The method of claim 5, wherein the act (B) further comprises, if it is determined that the text representing the link on the first web page (302) does not correspond to the title of the second web page (304), providing a visual indication on the GUI.

7. A computer-readable medium encoded with instructions which, when executed by a processor, causes the processor to perform the method of one of claims 1 to 6.

8. A system for evaluating a hypertext link (305, 310, 331) included in a first web page (302), the link referencing a second web page (304), the system **characterized by** comprising:
a determination controller to compute a relevancy score defining the extent to which text representing the link on the first web page corresponds to a title of the second web page.

9. The system of claim 8, wherein the system further comprises:
a link text parsing controller that parses (410, 425) the text representing the link on the first web page into a first list of tokens, the first list of tokens including at least one token;
a page title parsing controller that parses (420, 425) the title of the second web page into a second list of tokens, the second list of tokens including at least one token; and
a comparison controller that compares (430) the first list of tokens to the second list of tokens.

10. The system of claim 9, wherein the comparison controller further:
selects a first token from the first list of tokens;
selects a second token from the second list of tokens;
determines (610) which of the first and second tokens is a larger token and which is a smaller token;
identifies (615) a portion of the larger token which constitutes a threshold percentage; and
determines (620) whether the threshold percentage is contained within the smaller token.

11. The system of claim 9, wherein the link text parsing controller further determines (425) a first list of significant tokens from the first list of tokens by comparing each of the tokens in the first list of tokens to a collection of insignificant tokens, the page title parsing controller further determines (425) a second list of significant tokens from the second list of tokens by comparing each of the tokens in the second list of tokens to a collection of insignificant tokens, and the comparison controller further compares (430) the first list of significant tokens to the second list of significant tokens.

12. The system of claim 8, further comprising:
a display controller to display the results of the determination controller on a graphical user interface, GUI (301, 303).

13. The system of claim 12, wherein the display controller, if it is determined that the text represents the link on the first web page (302) does not correspond to the title of the second web page (304), provides a visual indication on the GUI.

## Patentansprüche

1. Automatisiertes Verfahren zur Evaluierung eines Hypertextlinks (305, 310, 331), der in einer ersten Webseite (302) enthalten ist, wobei der Link auf eine zweite Webseite (304) verweist,
**gekennzeichnet durch**:
(A) Berechnen eines Relevanztreffers, der das Ausmaß definiert, in dem Text, der den Link auf der ersten Webseite repräsentiert, einem Titel (350) der zweiten Webseite entspricht.

2. Verfahren nach Anspruch 1, bei dem der Vorgang (A) weiterhin enthält:
(A1) Parsen (410, 425) des Textes, der den Link auf der ersten Webseite repräsentiert, in eine erste Tokenliste, wobei die erste Tokenliste wenigstens ein Token enthält;
(A2) Parsen (420, 425) des Titels der zweiten Webseite in eine zweite Tokenliste, wobei die zweite Tokenliste wenigstens ein Token enthält; und
(A3) Vergleichen (430) der ersten Tokenliste mit der zweiten Tokenliste.

3. Verfahren nach Anspruch 2, bei dem der Vorgang (A3) weiterhin enthält:
Wählen eines ersten Tokens aus der ersten Tokenliste;
Wählen eines zweiten Tokens aus der zweiten Tokenliste;
Bestimmen (610), welches des ersten und des zweiten Tokens das größere Token und welches das kleinere Token ist;
Identifizieren (615) eines Abschnittes des größeren Tokens, das einen Schwellenwertprozentsatz bildet; und
Bestimmen (620), ob der Schwellenwertprozentsatz im kleineren Token enthalten ist.

4. Verfahren nach Anspruch 2, bei dem der Vorgang (A1) weiterhin das Bestimmen (425) einer ersten Liste signifikanter Token aus der ersten Tokenliste durch Vergleichen jedes der Token in der ersten Tokenliste mit einer Sammlung insignifikanter Token umfasst, der Vorgang (A2) weiterhin das Bestimmen (425) einer zweiten Liste signifikanter Token aus der zweiten Tokenliste durch Vergleichen jedes der Token in der zweiten Tokenliste mit einer Sammlung insignifikanter Token umfasst und der Vorgang (A3) weiterhin das Vergleichen (430) der ersten Liste signifikanter Token mit der zweiten Liste signifikanter Token umfasst.

5. Verfahren nach Anspruch 1, weiterhin enthaltend folgenden Vorgang:
(B) Anzeigen der Ergebnisse der Bestimmung in Vorgang (A) auf einer grafischen Benutzeroberfläche, GUI (301, 303).

6. Verfahren nach Anspruch 5, bei dem der Vorgang (B), sofern bestimmt wird, dass der Text, der den Link auf der ersten Webseite (302) repräsentiert, nicht dem Titel auf der zweiten Webseite (304) entspricht, das Bereitstellen einer visuellen Kennzeichnung auf der GUI beinhaltet.

7. Computerlesbares Medium, das mit Anweisungen codiert ist, die, wenn sie von einem Prozessor ausgeführt werden, den Prozessor veranlassen, das Verfahren nach einem der Ansprüche 1 bis 6 auszuführen.

8. System zur Evaluierung eines Hypertextlinks (305, 310, 331), der in einer ersten Webseite (302) enthalten ist, wobei der Link auf eine zweite Webseite (304) verweist und das System **dadurch gekennzeichnet ist, dass** es enthält:
eine Bestimmungs-Steuereinheit, die einen Relevanztreffer berechnet, der das Ausmaß definiert, in dem der Text, der den Link auf der ersten Webseite repräsentiert, einem Titel der zweiten Webseite entspricht.

9. System nach Anspruch 8, wobei das System weiterhin enthält:
eine Linktextpars-Steuereinheit, die den Text, der den Link auf der ersten Webseite repräsentiert, in eine erste Tokenliste parst (410, 425), wobei die erste Tokenliste wenigstens ein Token enthält;
eine Seitentitelpars-Steuereinheit, die den Titel der zweiten Webseite in eine zweite Tokenliste parst (420, 425), wobei die zweite Tokenliste wenigstens ein Token enthält; und
eine Vergleichs-Steuereinheit, die die erste Tokenliste mit der zweiten Tokenliste vergleicht (430).

10. System nach Anspruch 9, bei dem die Vergleichs-Steuereinheit weiterhin ausführt:
Wählen eines ersten Tokens aus der ersten Tokenliste;
Wählen eines zweiten Tokens aus der zweiten Tokenliste;
Bestimmen (610), welches des ersten und des zweiten Tokens das größere Token und welches das kleinere Token ist;
Identifizieren (615) eines Abschnittes des größeren Tokens, das einen Schwellenwertprozentsatz bildet; und
Bestimmen (620), ob der Schwellenwertprozentsatz im kleineren Token enthalten ist.

11. System nach Anspruch 9, bei dem die Linktextpars-Steuereinheit weiterhin eine erste Liste signifikanter Token aus der ersten Tokenliste durch Vergleichen jedes der Token in der ersten Tokenliste mit einer Sammlung insignifikanter Token bestimmt (425), die Seitentitelpars-Steuereinheit weiterhin eine zweiten Liste signifikanter Token aus der zweiten Tokenliste durch Vergleichen jedes der Token in der zweiten Tokenliste mit einer Sammlung insignifikanter Token bestimmt (425) und die Vergleichs-Steuereinheit weiterhin die erste Liste signifikanter Token mit der zweiten Liste signifikanter Token vergleicht (430).

12. System nach Anspruch 8, weiterhin enthaltend:
eine Anzeige-Steuereinheit zum Anzeigen der Ergebnisse der Bestimmungs-Steuereinheit auf einer grafischen Benutzeroberfläche, GUI (301, 303).

13. System nach Anspruch 12, bei dem die Anzeige-Steuereinheit, sofern bestimmt wird, dass der Text, der den Link auf der ersten Webseite (302) repräsentiert, nicht dem Titel auf der zweiten Webseite (304) entspricht, eine visuelle Kennzeichnung auf der GUI bereitstellt.

## Revendications

1. Procédé automatisé pour évaluer un lien hypertexte (305, 310, 331) inclus dans une première page Web (302), le lien référençant une seconde page Web (304),
**caractérisé par** :
(A) le calcul d'un indice de pertinence définissant la mesure dans laquelle un texte représentant le lien de la première page Web correspond à un titre (350) de la seconde page Web.

2. Procédé conformément à la revendication 1, dans lequel l'étape (A) comprend en outre :
(A1) l'analyse (410, 425) du texte représentant le lien de la première page Web en une première liste d'unités lexicales, ladite première liste comprenant au moins une unité lexicale ;
(A2) l'analyse (420, 425) du titre de la seconde page Web en une seconde liste d'unités lexicales, ladite seconde liste comprenant au moins une unité lexicale ; et
(A3) la comparaison (430) de la première liste d'unités lexicales à la seconde liste d'unités lexicales.

3. Procédé conformément à la revendication 2, dans laquelle l'étape (A3) comprend en outre :
la sélection d'une première unité lexicale à partir de la première liste d'unités lexicales ;
la sélection d'une seconde unité lexicale à partir de la seconde liste d'unités lexicales ;
la détermination (610) entre les première et seconde unités lexicales de celle qui est une unité lexicale plus grande et de celle qui est une unité lexicale plus petite ;
l'identification (615) d'une partie de l'unité lexicale plus grande qui constitue un pourcentage seuil ; et
la détermination selon laquelle le pourcentage seuil est ou non contenu dans l'unité lexicale plus petite.

4. Procédé conformément à la revendication 2, dans lequel l'étape (A1) comprend en outre la détermination (425) d'une première liste d'unités lexicales significatives à partir de la première liste d'unités lexicales en comparant chacune des unités lexicales de la première liste d'unités lexicales à une collection d'unités lexicales non significatives, l'étape (A2) comprend en outre la détermination (425) d'une seconde liste d'unités lexicales significatives à partir de la seconde liste d'unités lexicales en comparant chacune des unités lexicales de la seconde liste d'unités lexicales à une collection d'unités lexicales non significatives, et l'étape (A3) comprend en outre la comparaison (430) de la première liste d'unités lexicales significatives à la seconde liste d'unités lexicales significatives.

5. Procédé conformément à la revendication 1 comprenant en outre une étape :
(B) d'affichage des résultats de la détermination de l'étape (A) sur une interface utilisateur graphique (GUI) (301, 303).

6. Procédé conformément à la revendication 5, dans lequel, s'il est déterminé que le texte représentant le lien de la première page Web (302) ne correspond pas au titre de la seconde page Web (304), l'étape (B) comprend en outre la fourniture d'une indication visuelle sur l'interface GUI.

7. Support lisible par ordinateur codé avec des instructions, lesquelles, lorsqu'elles sont exécutées par un processeur, amènent ce dernier à exécuter le procédé de l'une des revendications 1 à 6.

8. Système pour évaluer un lien hypertexte (305, 310, 331) inclus dans une première page Web (302), le lien référençant une seconde page Web (304), le système étant **caractérisé en ce qu'**il comprend :
un dispositif de commande de détermination pour calculer un indice de pertinence définissant la mesure dans laquelle un texte représentant le lien de la première page Web correspond à un titre de la seconde page Web.

9. Système conformément à la revendication 8, dans lequel le système comprend en outre :
un dispositif de commande d'analyse de texte de lien qui analyse (410, 425) le texte représentant le lien de la première page Web en une première liste d'unités lexicales, ladite première liste comprenant au moins une unité lexicale ;
un dispositif de commande d'analyse de titre de page qui analyse (420, 425) le titre de la seconde page Web en une seconde liste d'unités lexicales, ladite seconde liste comprenant au moins une unité lexicale ; et
un dispositif de commande de comparaison qui compare (430) la première liste d'unités lexicales à la seconde liste d'unités lexicales.

10. Système conformément à la revendication 9, dans lequel le dispositif de commande de comparaison comprend en outre :
la sélection d'une première unité lexicale à partir de la première liste d'unités lexicales ;
la sélection d'une seconde unité lexicale à partir de la seconde liste d'unités lexicales ;
la détermination (610) entre les première et seconde unités lexicales de celle qui est une unité lexicale plus grande et de celle qui est une unité lexicale plus petite ;
l'identification (615) d'une partie de l'unité lexicale plus grande qui constitue un pourcentage seuil ; et
la détermination (620) selon laquelle le pourcentage seuil est ou non contenu dans l'unité lexicale plus petite.

11. Système conformément à la revendication 9, dans lequel le dispositif de commande d'analyse de texte de lien détermine en outre (425) une première liste d'unités lexicales significatives à partir de la première liste d'unités lexicales en comparant chacune des unités lexicales de la première liste d'unités lexicales à une collection d'unités lexicales non significatives, le dispositif de commande d'analyse de titre de page détermine en outre (425) une seconde liste d'unités lexicales significatives à partir de la seconde liste d'unités lexicales en comparant chacune des unités lexicales de la seconde liste d'unités lexicales à une collection d'unités lexicales non significatives, et le dispositif de commande de comparaison compare en outre (430) la première liste d'unités lexicales significatives à la seconde liste d'unités lexicales significatives.

12. Système conformément à la revendication 8 comprenant en outre :
un dispositif de commande d'affichage pour afficher les résultats du dispositif de commande de détermination sur une interface utilisateur graphique (GUI) (301, 303).

13. Système conformément à la revendication 12, dans lequel, s'il est déterminé que le texte représentant le lien de la première page Web (302) ne correspond pas au titre de la seconde page Web (304), le dispositif de commande d'affichage fournit une indication visuelle sur l'interface GUI.
